(19) Europäisches Patentamt
European Patent Office
Office européen des brevets

(11) EP 2 157 391 A1

(12) **EUROPEAN PATENT APPLICATION**
published in accordance with Art. 153(4) EPC

(43) Date of publication:
**24.02.2010 Bulletin 2010/08**

(51) Int Cl.:
*F28D 15/02* (2006.01)

(21) Application number: **08765478.6**

(22) Date of filing: **11.06.2008**

(86) International application number:
**PCT/JP2008/060699**

(87) International publication number:
**WO 2008/153071 (18.12.2008 Gazette 2008/51)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **15.06.2007 JP 2007158631**

(71) Applicant: **Asahi Kasei Fibers Corporation Osaka-shi, Osaka 530-8205 (JP)**

(72) Inventors:
• **OBARA, Kazuyuki**
  **Tokyo 101-8101 (JP)**
• **MAKINO, Hiroyuki**
  **Tokyo 101-8101 (JP)**

(74) Representative: **Weber, Thomas**
  **Patentanwälte**
  **von Kreisler Selting Werner**
  **Deichmannhaus am Dom**
  **Bahnhofsvorplatz 1**
  **50667 Köln (DE)**

(54) **LOOP HEAT PIPE TYPE HEAT TRANSFER DEVICE**

(57) It is an object of the invention to provide a loop heat pipe type heat transfer device that has reduced size, thickness and weight and exhibits high heat transfer performance. The loop heat pipe type heat transfer device is provided with an evaporator, a steam pipe that conducts a gas phase working fluid from the evaporator, a condenser connected to the steam pipe and a fluid pipe that circulates the liquid phase working fluid from the condenser to the evaporator, and is **characterized in that** a wick composed of a fiber structure laminate comprising a laminated nonwoven fabric is set inside the evaporator.

# Fig.1

**Description**

[TECHNICAL FIELD]

The present invention relates to a loop heat pipe type heat transfer device, and particularly relates to a loop heat pipe type heat transfer device suitable for use in fields that require small and light, yet efficient, heat transfer devices, such as personal computers and the like.

[BACKGROUND ART]

Loop heat pipe type heat transfer devices are known as conventional heat transfer devices for use in space, industrial and household appliances, and are described in, for example, Patent document 1. In such loop heat pipe type heat transfer devices, heat is absorbed by an evaporator from a heat-generating source, evaporating a working fluid into a gas phase, and the obtained steam is fed through a steam pipe to a condenser where heat is dissipated at the heat sink, forming a liquid phase.
Thus in space applications, for example, the heat generated by internal devices is absorbed by the evaporator and released out into space at the condenser, thus allowing the temperature of the devices to be controlled. Because no mechanically driven parts are used, the heat transfer devices can be stably used for long periods in unmanned spacecraft and the like.

Such a loop heat pipe type heat transfer device has a wick composed of a porous material inside the evaporator. In the case of a cylindrical evaporator, the wick divides the interior of the evaporator into an interior liquid pool chamber that holds the working fluid in its liquid phase, and an exterior steam chamber which holds the working fluid in its gas phase. The liquid phase working fluid migrates outward through the wick by capillary action, and evaporation takes place on the surface sections of the wick. The wick is a porous body composed of a material which may be a metal such as copper, aluminum or nickel, a ceramic such as alumina, titanium oxide or silica or a polymer such as stretched porous polytetrafluoroethylene or polyethylene.

The pore size of the wick in the evaporator is uniform in the radial direction, or the pore size of the inner perimeter of the wick is larger than the outer perimeter. Patent document 1 teaches that by increasing the pore size at the inner perimeter, it is possible to evaporate the working fluid uniformly across the entire wick and thus improve the performance of the evaporator. However, because the pore diameter is small at the outer perimeter where the working fluid evaporates, evaporation does not occur without application of a large quantity of heat. Therefore, 50W or more of heat must be applied to the evaporator in order to operate the loop heat pipe type heat transfer device.

In order to solve this problem, Patent document 2 discloses an invention wherein the pore size at the outer perimeter of the wick is larger than the inner perimeter in the evaporator. As the inner perimeter, sufficient capillary action is produced so that the liquid phase working fluid is suctioned and evaporation is accelerated at the surface of the wick. Because of the large pore size at the outer perimeter however, movement of the liquid phase working fluid by capillary action is inhibited and supply of the working fluid to the evaporator can potentially pool, thus interfering with the thermal conductivity of the loop heat pipe type heat transfer device.

It has also been attempted to achieve high-efficiency heat transfer performance with loop heat pipe type heat transfer devices for use in personal computers (PCs) and especially laptop PCs. Laptop PCs are small and lightweight while exhibiting high performance because the clock frequency of the central (mobile) processing unit MPU is increased and MPUs are also highly integrated, but this also increases the heat density. In particular, the heat density of high thermal elements is 100 W/cm$^2$, which is a level close to that of a nuclear reactor. Therefore, loop heat pipe type heat transfer devices must also be reduced in size, thickness and weight while also exhibiting higher thermal conductivity. Consequently, the wicks that determine the thermal conductivity must have improved capillary action and reduced resistance to fluid passage, in order to increase mobility of liquid phase working fluids while promoting evaporation with less application of heat.

In order to satisfy these requirements of performance, it has been a goal to simultaneously achieve a reduced pore size to increase capillary action, and a higher void percentage to lower resistance to fluid passage in order to promote evaporation. Yet porous materials cannot provide both reduction in pore size and increase in void percentage, the void percentage being reduced with smaller pore sizes, and this has limited performance enhancement.

Patent document 3 discloses an ordinary heat pipe that employs a fabric member as the wick. This document teaches that fabric members have finer meshes than wire mesh and can provide greater capillary action than wire mesh, while permitting smaller thicknesses, and can therefore contribute to much smaller, thinner and lighter cooling devices. However, Patent document 3 does not disclose use of a fabric member in a loop heat pipe type heat transfer device. Therefore, although document 3 relates to capillary action it contains no description relating to the void percentage. Furthermore, nothing is mentioned regarding the properties of the fabric member, and it is not clear whether or not the fabric member is suitable for use as a wick.

[Patent document 1] Japanese Unexamined Patent Publication No. 10-246583
[Patent document 2] Japanese Unexamined.Patent Publication No. 2002-181470
[Patent document 3] Japanese Unexamined Patent Publication No. 2004-324906

[DISCLOSURE OF INVENTION]

[Problems to be Solved by the Invention]

The present invention has been accomplished in light of the circumstances described above, and its object is to provide a loop heat pipe type heat transfer device which is small, thin and light while also exhibiting high heat transfer performance, by setting a wick composed of a fiber structure laminate comprising a laminated nonwoven fabric, inside an evaporator and optimizing the mean flow pore size, void percentage and void index (void percentage/mean flow pore size) of the fiber structure laminate.

[Means for Solving the Problems]

In order to achieve the object stated above, the present invention employs a wick composed of a fiber structure laminate comprising a laminated nonwoven fabric. The mean flow pore size, void percentage and void index of the fiber structure laminate can be easily controlled by the nonwoven fabric properties, the laminate structure and the bonding method and conditions, and therefore movement of the working fluid by capillary action can be accelerated while minimizing the resistance to fluid passage of the liquid phase working fluid flowing through the wick, and evaporation can be promoted even with application of a small amount of heat. As a result, it was found that this produces an enhancing effect on the thermal conductivity of the evaporator, and the invention was completed upon this finding.

Specifically, the present invention provides the following.

(1) A loop heat pipe type heat transfer device provided with an evaporator, a steam pipe that conducts a gas phase working fluid from the evaporator, a condenser connected to the steam pipe and a fluid pipe that circulates the liquid phase working fluid from the condenser to the evaporator, the loop heat pipe type heat transfer device being **characterized in that** a wick composed of a fiber structure laminate comprising a laminated nonwoven fabric is set inside the evaporator. This construction increases the capillary action of the wick and lowers the resistance to fluid passage, thus promoting movement of the working fluid and increasing the maximum heat transport quantity.

(2) A loop heat pipe type heat transfer device according to (1) above, **characterized in that** the fiber structure laminate has a mean flow pore size of 0.1-30 $\mu$m, a void percentage of 65-95% and a void index (void percentage (%) /mean flow pore size ($\mu$m)) of 10-1000. Setting the properties of the fiber structure laminate within these ranges increases the capillary action of the wick while lowering the resistance to fluid passage and accelerating movement of the working fluid and increasing the maximum heat transport quantity.

(3) A loop heat pipe type heat transfer device according to (1) or (2) above, **characterized in that** the fiber structure laminate has a 10% flow pore size that is 0-20 $\mu$m larger than the mean flow pore size. This will allow uniform movement of the working fluid and improve the evaporation efficiency.

(4) A loop heat pipe type heat transfer device according to any one of (1) to (3) above, **characterized in that** the nonwoven fabric of the fiber structure laminate is bonded in a laminated state, and the bonding area is 0.2-20% of the nonwoven fabric area. This will result in satisfactory handleability without increasing the resistance to fluid passage for the working fluid.

(5) A loop heat pipe type heat transfer device according to any one of (1) to (4) above, **characterized in that** the fiber structure laminate comprises at least two different laminated nonwoven fabrics with different void indexes (void percentage (%)/mean flow pore size ($\mu$m)). This will accelerate movement of the working fluid in the wick and allow the nonwoven fabric near the evaporation surface to be suitable for evaporation, so that evaporation can be promoted with low application of heat.

(6) A loop heat pipe type heat transfer device according to (5) above, **characterized in that** some of the bonded sections of the fiber structure laminate in the evaporator are used as sections that maintain the airtightness of the evaporator. This can simplify the construction of the evaporator and contribute to size, thickness and weight reduction of the evaporator.

[Effect of the Invention]

By using the loop heat pipe type heat transfer device of the invention it is possible to achieve high-efficiency heat transfer in electronic devices such as PCs and servers, for which size, thickness and weight reduction, as well as high performance, are required.

[BRIEF DESCRIPTION OF THE DRAWINGS]

Fig. 1 shows an example of a loop heat pipe type heat transfer device according to the invention.
Fig. 2 shows an assembly drawing of the evaporator in Fig. 1.

[Explanation of Symbols]

1    Evaporator
2    Steam pipe
3    Condenser
4    Fluid pipe
5    Wick
6    Steam chamber
7    Liquid pool chamber
10   Upper enclosure of evaporator
11   Lower enclosure of evaporator

[BEST MODE FOR CARRING OUT THE INVENTION]

It is essential that the wick used for the invention must be a nonwoven fabric with a laminated structure.
The nonwoven fabric is obtained by laminating fibers whose aspect ratio represented by fiber length/diameter is 5 or greater, randomly and/or in an oriented fashion within a plane and partially bonding and/or fixing the fibers by any of various methods. Since nonwoven fabrics form pores based on the large area-to-weight ratio of the fibers, smaller pores can be formed compared to conventional porous materials such as sintered metal that form pores using powder, even when only small amounts of fibers are in the spaces. The pore size can therefore be reduced and a larger void percentage can be maintained. The diameter of the fibers composing the nonwoven fabric may be selected in a range from submicron to several tens of microns, thus allowing easy control of the pore size. The fabric made of the fibers is a woven fabric or knitted fabric, and whereas woven fabrics have weave textures and knitted fabrics have meshes, such that large pore sections are present as the fabrics are formed, these are not present in nonwoven fabrics. In other words, only a nonwoven fabric can reduce the aperture size while increasing the void percentage, as required for the wick.
There are no particular restrictions on the material used to compose the nonwoven fabric used for the invention. Synthetic resin-based fibers, cellulose-based fibers, metal fibers, ceramic-based fibers, glass fibers or carbon fibers may be used.
The form of the fibers may be long filaments or staple fibers, or a mixture of the two.
As synthetic resin-based fibers there may be mentioned fibers made of polyamides such as nylon 6, nylon 66 and copolymerized polyamides, fibers made of polyolefins such as polyethylene, polypropylene and copolymerized polypropylene, fibers made of polyesters such as polyethylene terephthalate, polybutylene terephthalate, polytetramethylene terephthalate and copolymerized polyesters, acrylic fibers, acetal-based fibers and ethylene tetrafluoride-based fibers.
As cellulose-based fibers there may be mentioned viscose rayon, cupra rayon, pulp, cotton and hemp.
As metal fibers there may be mentioned copper, brass, aluminum, aluminum alloys, SUS and titanium.
As ceramic-based fibers there may be mentioned alumina, titanium oxide and silicon carbide.
Any of the above may be used alone, or two or more may be used in admixture.
Synthetic resin-based fibers with low thermal conductivity are preferred for easier control of the fiber diameter, and because they allow the pore size to be freely varied and can suppress evaporation of the working fluid inside the wick, and particularly preferred are polyamide-based fibers, polyolefin-based fibers and polyester-based fibers because of their excellent chemical stability.
The fibers used are preferably made of a material with high affinity with the working fluid. If a material with low affinity is used, surface treatment after formation of the nonwoven fabric by a known method is preferred to improve the affinity. For example, when an aqueous fluid containing 80 wt% water is used as working fluid, it is preferred to use a hydrophilic material such as a cellulose-based fiber or polyamide-based fiber.

When a hydrophobic material such as polyolefin-based fiber or polyester-based fiber is used, a preferred mode involves surface treatment with addition of a surfactant or the like by a known method, to render the fiber surfaces hydrophilic. The fibers used may also be conjugate fibers in which the sheath section may consist of polyethylene, polypropylene or a copolymerized polyester while the core section consists of a polyamide or polyester.

The cross-sectional shape of the fibers of the nonwoven fabric used for the invention may be circular or a non-circular irregular shape, but an irregular shape is preferred for an increased area-to-weight ratio.

There are no particular restrictions on the process for production of the nonwoven fabric used for the invention, and any publicly known process may be employed. For example, there may be mentioned spunlace methods, needle punching methods, spunbond methods, melt blowing methods, flash spun methods and electrospinning methods. Spunlace methods, spunbond methods, melt blowing methods and flash spun methods are preferred since they allow easier control of the pore size.

The properties of the nonwoven fabric used for the invention are not particularly restricted so long as they are appropriately selected so that the properties of the fiber structure laminate obtained therefrom are within the ranges specified below.

The fiber structure laminate of the invention will now be explained. The fiber structure laminate must be constructed by laminating a nonwoven fabric. Also, the fiber structure laminate preferably has a mean flow pore size of 0.1-30 $\mu$m, a void percentage of 65-95% and a void index (void percentage (%)/man flow pore size ($\mu$m)) of 10-1000.

The 10% flow pore size of the fiber structure laminate is preferably 0-20 $\mu$m larger than the mean flow pore size. The nonwoven fabric of the fiber structure laminate is bonded in a laminated state, and the bonding area is preferably 0.2-20% of the nonwoven fabric area.

The fiber structure laminate used for the invention preferably has a mean flow pore size of 0.1-30 $\mu$m. It is more preferably 0.1-10 $\mu$m, even more preferably 0.2-10 $\mu$m and most preferably 0.2-5 $\mu$m. A mean flow pore size of 0.1-30 $\mu$m will allow sufficient capillary action to be achieved and will permit industrial production, while preventing very large resistance to fluid passage through each pore.

Since the mean flow pore size does not change significantly by lamination, a fiber structure laminate with the prescribed mean flow pore size can be obtained by using a nonwoven fabric matching that mean flow pore size for 30 wt% of the nonwoven fabric, and a nonwoven fabric with a larger mean flow pore size for the rest. For example, to obtain a fiber structure laminate with a mean flow pore size of 2 $\mu$m, the construction may consist of 100 wt% of a melt blown nonwoven fabric with a mean fiber size of 1 $\mu$m and a mean flow pore size of 2 $\mu$m.

The flow pore size according to the invention may be determined by the airflow method described on p.147 of "Maku Bunri Gijutsu [Membrane Separation Technology] Manual", ed. by N. Kimura, K. Sakai, T. Shirota and T. Ukai (published August 10, 1990 by IPC Shuppan). Specifically, the fiber structure laminate is first immersed in a liquid with known surface tension, pressure is applied to the laminate with all of the pores of the laminate covered with a film of the liquid, and the pore size is calculated from the pressure at which the liquid film breaks, and the surface tension of the liquid. The following formula (1) is used for the calculation.

$$d = C \times r/P \qquad (1)$$

(d represents the pore size, r represents the surface tension of the liquid, P represents the pressure at which the liquid film breaks at that pore size, and C is a constant.)

The flow pore size of the fiber structure laminate will usually have a distribution. The flow pore size distribution can be determined by continuously varying the pressure and calculating the amount of liquid film that breaks at each pressure, based on the change in the flow rate through the laminate at that pressure. A Palm Porometer by PMI, an apparatus conforming to ASTM E 1294-89, may be used as the measuring apparatus.

Based on formula (1), when the pressure P applied to the liquid-immersed laminate is continuously varied from low pressure to high pressure, the initial pressure cannot break the liquid film even on the largest pores, and therefore the flow rate is 0. As the pressure is increased, the liquid film begins to break on the largest pores, creating a flow (bubble point). As the pressure is further increased, the liquid film begins to break on smaller pores, and the flow rate approaches the flow rate without immersion in the liquid (dry flow rate).

The mean flow pore size is the pore size broken with a pressure such that the flow rate when the laminate is immersed in the liquid (wet flow rate) is 50% of the flow rate without immersion (dry flow rate).

The fiber structure laminate used for the invention preferably has a 10% flow pore size which is 0-20 $\mu$m larger than the mean flow pore size. It is more preferably 0-10 $\mu$m and most preferably 0-5 $\mu$m larger.

The difference between the 10% flow pore size and the mean flow pore size represents the distribution of pore sizes, and a smaller value indicates a lower distribution. A difference of 0 $\mu$m indicates uniform pores. The 10% flow pore size is preferably less than (mean flow pore size + 20 $\mu$m) in order to allow uniform movement of the working fluid through the entire evaporator and improve the evaporation efficiency, without uneven flow of the working fluid through the large pores that have low resistance to fluid passage.

The 10% flow pore size is the pore size broken with a pressure such that the flow rate when the laminate is immersed in the liquid (wet flow rate) is 10% of the flow rate without immersion (dry flow rate). The 10% flow pore size and mean flow pore size are determined by the methods described hereunder.

The fiber structure laminate used for the invention preferably has a void percentage of 65-95%. It is more preferably 70-95% and even more preferably 80-95%. A void percentage of 65-95% will lower the resistance to fluid passage of the laminate and provide sufficient strength for handling, as well as sufficient durability.

Since the void percentage tends to be slightly reduced by the pressure during bonding, it is preferred to select a nonwoven fabric with a void percentage of about 5% greater than the prescribed void percentage for the fiber structure laminate. A known method may be used to set the appropriate bonding conditions between the fibers, in order to obtain a nonwoven fabric with the prescribed void percentage.

The void percentage, according to the invention, is the proportion of voids per unit volume of the fiber structure laminate. The void percentage is calculated by the following formula (2), using the basis weight W (g/cm$^2$) and thickness T (cm) of the fiber structure laminate, and the true specific gravity p of the fibers composing the laminate.

$$\texttt{Void percentage = \{1-W/(T $\times$ $\rho$)\} $\times$ 100 \quad (2)}$$

The basis weight and thickness of the fiber structure laminate may be determined according to JISL-1096.

The fiber structure laminate used for the invention preferably has a void index of 10-1000, as the ratio of the void percentage (%) determined in the manner explained above, and the mean flow pore size ($\mu$m) (void percentage (%)/mean flow pore size ($\mu$m)). The lower limit for the void index is even more preferably 20 and most preferably 25. The upper limit is even more preferably 800 and most preferably 500.

The void index is the parameter most responsible for the maximum heat transport quantity, which is an indicator of the performance of the loop heat pipe type heat transfer device, and generally a larger void index corresponds to a greater maximum heat transport quantity. The optimal combination of the void percentage and mean flow pore size, which are difficult to control separately, produces the maximum void index, and therefore the void index is effective as a parameter for optimizing both properties. A void index of 10-1000 is optimal for a structure to be used as a wick that has sufficiently powerful capillary action and low resistance to fluid passage, and that can be industrially produced. By using a nonwoven fabric with a void index of 10-1000 for at least 70 wt% of the fabric, it is possible to ensure a void index of 10-1000 for the fiber structure laminate. The void index of metal sintered materials that are conventionally used as wicks is about 7.5 while the void index of sintered ceramics is about 2, and these are relatively small compared to the fiber structure laminate of the invention. It has therefore been difficult to exhibit satisfactory performance as a wick due to either poor capillary action or high resistance to fluid passage.

According to the invention, it is possible to realize a large void index by using as the material a nonwoven fabric that is completely different from materials used in the prior art, while simultaneously achieving sufficiently powerful capillary action and low resistance to fluid passage, thereby increasing the maximum heat transport quantity.

The fiber structure laminate used for the invention has the nonwoven fabric bonded in a laminated state, and the bonding area is preferably 0.2-20%, even more preferably 0.5-10% and most preferably 1-10% of the nonwoven fabric area, excluding the area bonded at the periphery of the wick for maintenance of the airtightness of the evaporator, as explained hereunder. Within this range, it is possible to obtain adhesive strength that can sustain an integrated state during handling without increasing the resistance to fluid passage of the working fluid. There are no particular restrictions on the bonding method. There may be employed, for example, emboss bonding that produces partial heat sealing, partial ultrasonic fusion in various forms such as pin or linear forms or combinations thereof, or thermal bonding with a powdery or fibrous thermoplastic resin. Partial ultrasonic fusion in various forms such as pin or linear forms or combinations thereof is preferred for easier control of the bonding area proportion and greater adhesive strength.

A single nonwoven fabric may be used for the invention, but a preferred mode is a laminated composite of nonwoven fabrics with different properties. Compositing of fabrics will allow improvement in competing properties, that cannot be achieved with a single type of fabric. It is particularly preferred to use a laminated composite of nonwoven fabrics with different void indexes. The method for measuring the void percentage and mean flow pore size will be described below.

According to a preferred mode, a nonwoven fabric with a void index of 5 is laminated on the front and back while 8 nonwoven fabrics with a void index of 40 are laminated between them, for a total of 10, to compose the fiber structure laminate. The nonwoven fabrics with a void index of 40 constitute approximately 80 wt% of this construction. Since nonwoven fabrics with small void indexes are situated on the side in contact with the working fluid, the resistance to fluid passage is very low and the working fluid that circulates back can be rapidly and uniformly dispersed in the fiber structure laminate. The working fluid that has been dispersed in the first nonwoven fabric of the laminated body is suctioned by the powerful capillary action in the layer of the next nonwoven fabric which has a large void index. Also, since the layer in contact with the evaporation surface has a small void index, the working fluid evaporates more readily and evaporation is promoted with low application of heat.

With conventionally employed metal or ceramic porous bodies, it has been difficult to control the properties while adjusting them. Stretched porous polytetrafluoroethylene obtained in sheet form allows adjustment of the properties by using sheets with different properties laminated as an integral whole. However, the distinct border between the sheets causes pooling of the working fluid between the sheets, potentially impeding the smooth flow of the working fluid. The fibers on the surface of a nonwoven fabric, however, become tangled and integrated with the fibers of the other laminated nonwoven fabrics by the pressure applied during bonding, and therefore no clear boundaries are present. Consequently, the working fluid does not easily pool between the nonwoven fabrics and smooth movement is promoted. Lamination and bonding of nonwoven fabrics is also useful from this viewpoint.

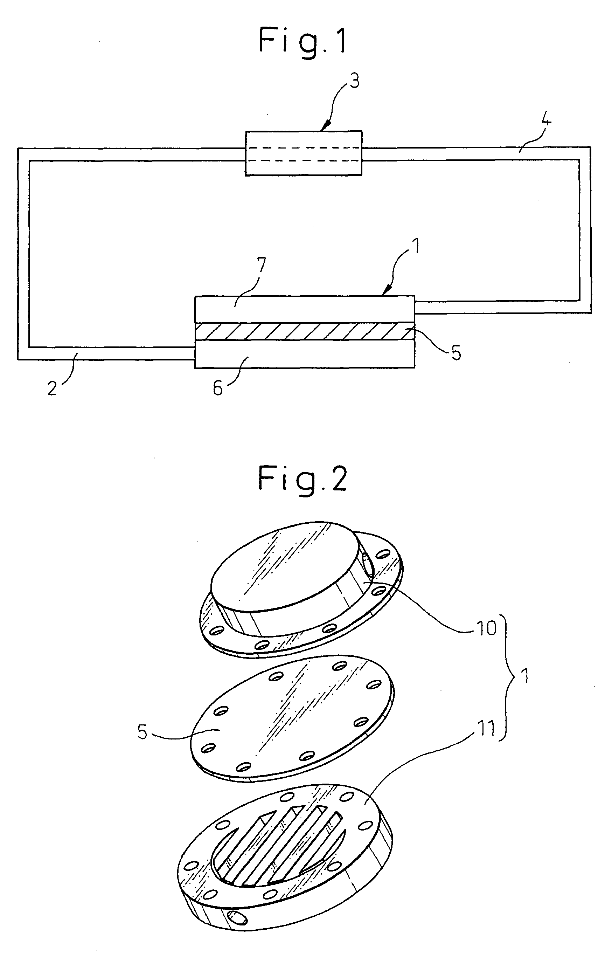

The loop heat pipe type heat transfer device of the invention is constructed with an evaporator, a steam pipe that conducts a gas phase working fluid from the evaporator, a condenser connected to the steam pipe and a fluid pipe that circulates the liquid phase working fluid from the condenser to the evaporator, wherein a wick composed of a fiber structure laminate with specified properties is set inside the evaporator. Known structures may be employed for the structure of the evaporator and condenser. Fig. 1 shows an example of a loop heat pipe type heat transfer device according to the invention, but there is no restriction to this structure. In Fig. 1, 1 is a circular flat evaporator, 2 is a steam pipe, 3 is a condenser and 4 is a fluid pipe. The condenser has a construction with a cooling fan and copper fin integrated in a cooling module, which is anchored by solder to the steam pipe. The wick 5 composed of the fiber structure laminate is set so that the interior of the evaporator 1 is split into an upper and lower section, with the lower section constituting the steam chamber 6 and the upper section constituting the liquid pool chamber 7.

The wick composed of the fiber structure laminate may be set in the evaporator in a manner that is known in the art, and it is not particularly restricted. The fiber structure laminate has high softness and flexibility, and is easily cut and bonded at the ends, so that it is highly workable and may be set in the desired manner. For example, if the evaporator is cylindrical, a groove may be formed in the inner wall of the evaporator and the fiber structure laminate shaped as a hollow cylindrical form may be set so as to contact with the protrusions of the groove. The working fluid that has returned from the fluid pipe flows into the liquid pool inside the hollow section. If the evaporator is flat, a flat fiber structure laminate may be set in the middle section with space above and below, as shown in Fig. 1.

There are no particular restrictions on the manner in which the wick composed of the fiber structure laminate is set inside the evaporator, but preferably a part of the bonded section of the fiber structure laminate is used as part of the structure maintaining the airtightness of the evaporator. The evaporator must have the non-condensable gas such as air in the container evacuated before filling it with the working fluid, and must be airtight to maintain a sufficient degree of vacuum of, for example, 0.1 Torr. The airtightness must be such as to prevent leakage of the working fluid steam generated by heating during use. Conventionally, the enclosures of the evaporator have been welded or soldered together for bonding to maintain airtightness. According to the invention, however, some of the bonded sections of the wick composed of the fiber structure laminate may also be used, in addition to the conventional known method.

Fig. 2 shows an assembly drawing of the evaporator 1 in Fig. 1. A construction for maintaining airtightness of the evaporator is shown in Fig. 2, but there is no restriction to this construction. In Fig. 2, 10 is the upper enclosure of the evaporator which also serves as a reservoir that stores the working fluid that has returned from the fluid pipe. Numeral 11 is the lower enclosure of the evaporator which absorbs heat from the device to be cooled and evaporates the working fluid. The working fluid steam flows through the grooves of the lower enclosure and reaches the steam pipe. The wick 5 composed of the fiber structure laminate is bonded by fusion at the peripheral sections. The bonding area proportion is 15%. The upper enclosure 10 and lower enclosure 11 are assembled across the wick 5 composed of the fiber structure laminate, to obtain an evaporator. The method of assembly is not particularly restricted, but a screw assembly is shown in this example. When the upper enclosure 10 and lower enclosure 11 are assembled across the wick composed of a porous material, airtightness cannot be maintained and means must be provided to maintain airtightness, such as welding of the enclosures together. When a wick composed of the fiber structure laminate bonded by fusion is used, the pores become crushed by the fusion, thus allowing airtightness to be maintained so that convenient means such as screwing may be employed for assembly.

As mentioned above, the nonwoven fabric may be integrated by having sections thereof bonded beforehand, but preferably it is bonded simultaneously with assembly of the evaporator. The bonding method for simultaneous bonding is not particularly restricted, but heat compression is preferred. With heat compression, the same construction and assembly method described above may be employed to achieve reduced size, thickness and weight while also lowering assembly costs.

The working fluid used for the invention may be a fluid that is commonly used for loop heat pipe type heat transfer devices. Examples thereof include water, ammonia, alcohols such as ethanol, hydrocarbons such as heptane, fluorocarbons such as Freon-11, liquid oxygen, liquid nitrogen and the like, although there is no restriction to these. Such fluids may be used either alone or in combinations, and when combined, their types and mixing ratios are preferably such as to form uniform solutions.

The working fluid is preferably an aqueous fluid containing at least 80 wt% water, which has a large merit number as defined by formula (3).

$$\text{Merit number} = (\text{density} \times \text{surface tension} \times \text{heat of vaporization})/\text{viscosity} \quad (3)$$

A larger merit number is preferred since it represents a greater maximum heat transport quantity. The merit numbers for typical fluids are as follows: ammonia ($1.1 \times 10^{11}$), Freon-11 ($1.2 \times 10^{10}$), Freon-113 ($7.3 \times 10^{9}$), pentane ($1.5 \times 10^{10}$), acetone ($3 \times 10^{10}$), methanol ($4.8 \times 10^{10}$), ethanol ($4.1 \times 10^{10}$), heptane ($1.3 \times 10^{10}$), water ($5.1 \times 10^{11}$), naphthalene ($3.4 \times 10^{10}$) Water is preferred as it has a large merit number and therefore a high maximum heat transport quantity. Water alone is preferred, but ketones such as acetone, alcohols such as methanol or ethanol and surfactants may also be added to the water. In this case, the water content is preferably at least 80 wt% in order to maintain a large merit number.

[EXAMPLES]

The present invention will now be explained in greater detail by examples and comparative examples, with the understanding that the invention is in no way limited only to the examples.
The measurement methods used for the invention are the following.

(1) Mean flow pore size ($\mu$m):

This was measured using a Palm Porometer (Model CFP-1200AEX) by PMI. A Silwick by PMI with a surface tension of 20.1 dynes/cm was used as the immersion liquid. The sample immersed in the immersion liquid was pretreated by lowering it to 80 kPa below atmospheric pressure and deairing so that no bubbles remained in the sample. The measuring diameter was 20 mm. Dry air was passed through the sample and the gas pressure was increased in stages, measuring the gas flow rate at each point. The pressure $P_{50}$ (PSI) at which the flow rate with the sample immersed in the liquid (wet flow rate) was 50% of the flow rate when not immersed (dry flow rate) was determined, and the mean flow pore size was calculated by the following formula (4).

$$d_{50} = C \times r/P_{50} \quad (4)$$

In the formula, $d_{50}$ is the mean flow pore size ($\mu$m), r is the surface tension of the immersion liquid, which was 20.1 (dynes/cm), and the constant C is 0.451 ($\mu$m·cm·PSI/dynes). Measurement was performed 3 times and the average value was calculated.

(2) 10% flow pore size ($\mu$m):

The pressure $P_{10}$ (PSI) at which the flow rate with the sample immersed in the liquid (wet flow rate) was 10% of the flow rate when not immersed (dry flow rate) was determined, and calculation was performed by the following formula (5) in the same manner as (1) above. Measurement was performed 3 times and the average value was calculated.

$$d_{10} = C \times r/P_{10} \quad (5)$$

(3) Void percentage (%):

The void percentage is calculated by the following formula (2), using the basis weight W (g/cm$^2$) and thickness T (cm) of the sample, and the true specific gravity p of the material composing the sample.

$$\text{Void percentage} = \{1-W/(T \times \rho)\} \times 100 \qquad (2)$$

The basis weight and thickness of the sample was determined according to JISL-1096.

(4) Bonding area proportion (%):

A 100 mm × 100 mm sample was imaged with a CCD camera and the image was analyzed with image analysis software, and upon conversion to binary format, the bonding sections were extracted and the bonding area (mm$^2$) was determined using the image analysis software. The proportion with respect to an imaged area of 10,000 mm$^2$ was determined and the bonding area proportion was calculated.

(5) Maximum heat transport quantity (W):

The sample was set in a circular flat evaporator with an outer diameter of 80 mm and a thickness of 20 mm made of SUS304, of the type shown in Fig. 1. The condenser, steam pipe and fluid pipe were all constructed of SUS316 pipes with outer diameters of 4 mm. The condenser was cooled by forced air-cooling using a cooling module having an integrated cooling fan and copper fins. The heat transfer distance, i.e. the length of the steam pipe, was about 1 m. The working fluid used was ethanol. A heater was installed below the evaporator, and the evaporator temperature T1 (K) and condenser temperature T2 (K) were measured with thermocouples soldered to the evaporator and condenser, while continuously increasing the input power, recording the maximum heat transport quantity as the input power at which T1-T2 was 50K.

(Example 1)

After laminating 10 polyethylene terephthalate melt blown nonwoven fabrics (products of Asahi Kasei Fibers Corp., basis weight: 40 g/m$^2$, void percentage: 90%, mean flow pore size: 2 μm; indicated as "MB" in Table 1), they were thermally bonded with a pin-type ultrasonic fuser. The bonding area proportion of the obtained fiber structure laminate was 1%. The mean flow pore size, void percentage, void index and maximum heat transport quantity of the laminate are shown in Table 1.

(Examples 2-4)

Fiber structure laminates were obtained in the same manner as Example 1, except that thermal bonding was carried out with a pin-type ultrasonic fuser having a different number of pins per unit area, and the bonding area proportions were 5% (Example 2), 0.1% (Example 3) and 30% (Example 4). The fiber structure laminate with a bonding area proportion of 0.1% in Example 3 had low adhesive force, underwent peeling when set in the evaporator and exhibited inferior handleability, but it was attached to the upper enclosure of the evaporator and the maximum heat transport quantity was measured. Example 4 which had a large bonding area proportion of 30% had a low effective liquid flow area, and the maximum heat transport quantity was smaller than Example 1.

(Example 5)

. A fiber structure laminate was obtained in the same manner as Example 1, except for laminating in order one polyethylene terephthalate spunbond nonwoven fabric (ELTAS by Asahi Kasei Fibers Corp., basis weight: 20 g/m$^2$, void percentage: 85%, mean flow pore size: 18 μm, indicated "SB" in Table 1), 8 polyethylene terephthalate melt blown nonwoven fabrics (product of Asahi Kasei Fibers Corp., basis weight: 40 g/m$^2$, void percentage: 90%, mean flow pore size: 2 μm) and one polyethylene terephthalate spunbond nonwoven fabric (ELTAS by Asahi Kasei Fibers Corp., basis weight: 20 g/m$^2$, void percentage: 85%, mean flow pore size: 18 μm), and the mean flow pore size, void percentage, void index and maximum heat transport quantity were determined. The results are shown in Table 1. The bonding area proportion of the obtained fiber structure laminate was 1%. Laminating the spunbond nonwoven fabric on the front and back sides resulted in more uniform movement of the working fluid and further increased the maximum heat transport quantity to facilitate evaporation.

(Example 6)

A fiber structure laminate was obtained in the same manner as Example 1, except that two nonwoven fabrics obtained by water stream interlacing of nylon 66 fibers with a fiber size of 5.5 $\mu$m (basis weight: 80 g/m$^2$, void percentage: 85%, mean flow pore size: 5 $\mu$m, indicated by "SL" in Table 1) were used. As shown by the results in Table 1, the maximum heat transport quantity was satisfactory.

(Example 7)

A fiber structure laminate was obtained in the same manner as Example 1, except that two nonwoven fabrics obtained by water stream interlacing and roll compression of nylon 66 fibers with a fiber size of 5.5 $\mu$m (basis weight: 150 g/m$^2$, void percentage: 60%, mean flow pore size: 5 $\mu$m) were used. The maximum heat transport quantity was lower than Example 6 due to a smaller void percentage.

(Example 8)

A fiber structure laminate was obtained in the same manner as Example 1, except that two nonwoven fabrics obtained by water stream interlacing of nylon 66 fibers with a fiber size of 10.1 $\mu$m (basis weight: 75 g/m$^2$, void percentage: 80%, mean flow pore size: 15 $\mu$m) were used. The maximum heat transport quantity was lower than Example 6 due to a larger mean flow pore size.

(Example 9)

A fiber structure laminate was obtained in the same manner as Example 1, except that two nonwoven fabrics obtained by water stream interlacing of nylon 66 fibers with a fiber size of 5.5 $\mu$m (basis weight: 120 g/m$^2$, void percentage: 80%, mean flow pore size: 6 $\mu$m) were used. The difference between the 10% flow pore size and mean flow pore size of this laminate was 12 $\mu$m, and a slightly larger pore size distribution resulted in a somewhat lower heat transport quantity compared to Example 6.

(Example 10)

A fiber structure laminate was obtained in the same manner as Example 1, except that two nonwoven fabrics obtained by water stream interlacing of nylon 66 fibers with a fiber size of 7.9 $\mu$m (basis weight: 150 g/m$^2$, void percentage: 75%, mean flow pore size: 8 $\mu$m) were used. A void index of less than 10 resulted in a lower heat transport quantity compared to Example 6.

(Comparative Example 1)

The mean flow pore size, void percentage, void index and maximum heat transport quantity were determined in the same manner as Example 1, except that a nickel sintering porous material was used as the wick. The results are shown in Table 1.

(Comparative Example 2)

The mean flow pore size, void percentage, void index and maximum heat transport quantity were determined in the same manner as Example 1, except that the wick was obtained by laminating 20 polytetrafluoroethylene porous materials (WP-500-100 POREFLON membrane, product of Sumitomo Electric Fine Polymer, Inc.). The results are shown in Table 1.

[Table 1]

Table 1

| | Laminated structure | Bonded area proportion (%) | Mean flow pore size (μm) | 10% Flow pore size (μm) | Void percentage (%) | Void index (%/μm) | Maximum heat transport quantity (W) |
|---|---|---|---|---|---|---|---|
| Example 1 | MB (10) | 1 | 2 | 9 | 88 | 44 | 216 |
| Example 2 | MB (10) | 5 | 2 | 9 | 88 | 44 | 207 |
| Example 3 | MB (10)) | 0.1 | 2 | 9 | 88 | 44 | 170 |
| Example 4 | MB (10) | 30 | 2 | 9 | 82 | 41 | 176 |
| Example 5 | SB(1)/MB (8)/SB(1) | 1 | 2 | 10 | 89 | 45 | 235 |
| Example 6 | SL (2) | 1 | 6 | 13 | 83 | 14 | 192 |
| Example 7 | SL (2) | 1 | 7 | 15 | 58 | 8 | 168 |
| Example 8 | SL (2) | 1 | 15 | 24 | 80 | 5 | 157 |
| Example 9 | SL (2) | 1 | 6 | 18 | 78 | 13 | 180 |
| Example 10 | SL (2) | 1 | 8 | 15 | 73 | 9 | 173 |
| Comp. Ex. 1 | - | - | 13 | 17 | 75 | 5.8 | 147 |
| Comp. Ex. 2 | - | - | 5 | 25 | 70 | 14 | 155 |

As clearly shown by the results for Example 1 and Comparative Examples 1 and 2 in Table 1, using fiber structure laminates according to the invention as wicks can increase the void percentage while reducing the mean flow pore size, compared to metal sintered materials or polytetrafluoroethylene porous materials that are conventionally used as wicks, and can therefore provide increased maximum heat transport quantity. As a result, it is possible to enhance the performance of loop heat pipe type heat transfer devices.

As shown by the results in Examples 6-10, limiting the properties of the nonwoven fabrics and the fiber structure laminates obtained by lamination of the nonwoven fabrics to the specific range, can further increase the maximum heat transport quantity and thus further enhance the performance of loop heat pipe type heat transfer devices.

(Example 11)

The fiber structure laminate obtained in Example 1 was punched into a circle with a diameter of 30 mm and then the periphery was bonded at a width of 3 mm. The bonding was accomplished by a method using a concentric circular die with an outer diameter of 30 mm and an inner diameter of 24 mm, heated to 300°C, for fusion by heat compression. Eight 1 mm-diameter screw holes were formed at the bonded section at equal spacings to form a wick. The wick was placed between a copper upper enclosure with an outer diameter of 30 mm, a brim width of 3 mm, a height of 5 mm and a thickness of 1 mm and a copper lower enclosure with an outer diameter of 30 mm, an edge width of 3 mm and a height of 5 mm, and 8 screws were used for assembly to obtain an evaporator. Copper pipes with an outer diameter of 3 mm and an inner diameter of 2 mm were soldered to 3.2 mm-diameter holes that had already been formed in the upper enclosure and lower enclosure, to form a fluid pipe and steam pipe, respectively. The fluid pipe was bent into a U shape and soldered to the steam pipe, to form a loop. A cooling module, comprising a cooling fan and 10 mm-high, 3 mm-pitch copper fins integrated therewith was soldered to the steam pipe at a position 100 mm from the lower enclosure, to obtain a condenser. Upon evacuation using a vacuum pump through a copper pipe for injection of the working fluid containing a 3-way cock separately mounted on the upper enclosure, satisfactory airtightness was exhibited and pressure reduction to 0.1 Torr was possible. After evacuation to 0.1 Torr, the 3-way cock was switched for injection of methanol. The copper pipe for injection of the working fluid was closed by compression and then welded to obtain a loop heat pipe type heat transfer device. Measurement of the maximum heat transport quantity in the same manner as Example 1 yielded a value of 80W.

(Example 12)

The fiber structure laminate obtained in Example 1 was punched into a circle with a diameter of 30 mm. After an upper enclosure and lower enclosure having the same shapes as in Example 11 were heated to 300°C, they were used to sandwich the fiber structure laminate and compressed. A loop heat pipe type heat transfer device was obtained in the same manner as Example 11, except that the upper enclosure and lower enclosure were bonded by the fused fiber structure laminate to obtain the evaporator. Pressure reduction to 0.1 Torr was possible as in Example 11. Measurement of the maximum heat transport quantity in the same manner as Example 1 yielded a value of 80W.

[INDUSTRIAL APPLICABILITY]

According to the invention it is possible to provide a loop heat pipe type heat transfer device which is small and light while also exhibiting high heat transfer performance, by setting a wick composed of a fiber structure laminate comprising a laminated and bonded nonwoven fabric, inside an evaporator and optimizing the mean flow pore size, void percentage and void index (void percentage/mean flow pore size) of the fiber structure laminate. It can therefore be used as a high-efficiency heat transfer device in electronic devices such as PCs and servers, for which size, thickness and weight reduction, as well as high performance, are required.

**Claims**

1. A loop heat pipe type heat transfer device provided with an evaporator, a steam pipe that conducts a gas phase working fluid from the evaporator, a condenser connected to the steam pipe and a fluid pipe that circulates the liquid phase working fluid from the condenser to the evaporator, the loop heat pipe type heat transfer device being **characterized in that** a wick composed of a fiber structure laminate comprising a laminated nonwoven fabric is set inside the evaporator.

2. A loop heat pipe type heat transfer device according to claim 1, **characterized in that** the fiber structure laminate has a mean flow pore size of 0.1-30 $\mu$m.

3. A loop heat pipe type heat transfer device according to claim 1 or 2, **characterized in that** the fiber structure laminate has a void percentage of 65-95% and a void index (void percentage (%)/mean flow pore size ($\mu$m)) of 10-1000.

4. A loop heat pipe type heat transfer device according to any one of claims 1 to 3, **characterized in that** the fiber structure laminate has a 10% flow pore size that is 0-20 $\mu$m larger than the mean flow pore size.

5. A loop heat pipe type heat transfer device according to any one of claims 1 to 4, **characterized in that** the nonwoven fabric of the fiber structure laminate is bonded in a laminated state, and the bonding area is 0.2-20% of the nonwoven fabric area, excluding the area bonded at the periphery of the wick for maintenance of the airtightness of the evaporator.

6. A loop heat pipe type heat transfer device according to any one of claims 1 to 5, **characterized in that** the fiber structure laminate comprises at least two different laminated nonwoven fabrics with different void indexes (void percentage (%)/mean flow pore size ($\mu$m)).

7. A loop heat pipe type heat transfer device according to claim 5, **characterized in that** some of the bonded sections of the fiber structure laminate in the evaporator are used as sections of the structure that maintain the airtightness of the evaporator.

# Fig.1

# Fig.2

## INTERNATIONAL SEARCH REPORT

| International application No. |
|---|
| PCT/JP2008/060699 |

**A. CLASSIFICATION OF SUBJECT MATTER**
*F28D15/02(2006.01)i*

According to International Patent Classification (IPC) or to both national classification and IPC

**B. FIELDS SEARCHED**

Minimum documentation searched (classification system followed by classification symbols)
F28D15/02, B01D39/16, B65D81/26

Documentation searched other than minimum documentation to the extent that such documents are included in the fields searched
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2007-107784 A  (Fujikura Ltd.),<br>26 April, 2007 (26.04.07),<br>Par. Nos. [0020] to [0025]; Fig. 1<br>(Family: none) | 1,2,4,5<br>3,6 |
| Y<br>A | JP 2002-206882 A  (Tokai Rubber Industries,<br>Ltd.),<br>26 July, 2002 (26.07.02),<br>Par. Nos. [0015] to [0022]; Fig. 2<br>(Family: none) | 1,2,4,5<br>3,6 |
| Y<br>A | JP 2000-255645 A  (Asahi Chemical Industry Co.,<br>Ltd.),<br>19 September, 2000 (19.09.00),<br>Claims 4, 7; Par. Nos. [0041] to [0057]<br>(Family: none) | 2,4<br>3,6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>02 September, 2008 (02.09.08) | Date of mailing of the international search report<br>16 September, 2008 (16.09.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2008/060699 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y<br>A | JP 10-268651 A  (Mitsubishi Paper Mills Ltd.),<br>09 October, 1998 (09.10.98),<br>Par. Nos. [0018], [0029]<br>(Family: none) | 2,4<br>3,6 |
| Y<br>A | JP 2005-152769 A  (Asahi Kasei Fibers Corp.),<br>16 June, 2005 (16.06.05),<br>Claim 1; Par. No. [0047]<br>(Family: none) | 2,4,5<br>3,6 |
| A | JP 2004-324906 A  (Sony Corp.),<br>18 November, 2004 (18.11.04),<br>Par. No. [0025]; Figs. 1, 2<br>(Family: none) | 1-7 |
| A | JP 2003-42675 A  (Tokai Rubber Industries, Ltd.),<br>13 February, 2003 (13.02.03),<br>Par. Nos. [0014] to [0019]<br>(Family: none) | 1-7 |
| A | JP 2002-372387 A  (Tokai Rubber Industries, Ltd.),<br>26 December, 2002 (26.12.02),<br>Claim 1<br>(Family: none) | 1,3 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10246583 A
- JP 2002181470 A
- JP 2004324906 A

**Non-patent literature cited in the description**

- Maku Bunri Gijutsu [Membrane Separation Technology] Manual. IPC Shuppan, 10 August 1990, 147